# EUROPÄISCHE PATENTSCHRIFT

(11) **EP 1 116 568 B1**
(45) Veröffentlichungstag und Bekanntmachung des Hinweises auf die Patenterteilung: **08.02.2006**
(21) Anmeldenummer: 00125651.0
(22) Anmeldetag: 23.11.2000
(51) Int. Cl.: B29C 47/20

(54) **Extruderdüsenkopf sowie Verfahren zu dessen Herstellung**
Extruder die and process of its manufacture
Tête d'extrusion et son procédé de fabrication

(30) Priorität: 14.01.2000 DE 10001362
(43) Veröffentlichungstag der Anmeldung: 18.07.2001
(73) Patentinhaber: Windmöller & Hölscher, D-49525 Lengerich (DE)
(72) Erfinder: Beckmann, Hans-Udo, 58509 Lüdenscheid (DE); Linkies, Jürgen, 49536 Lienen (DE); aus dem Moore, Dieter, 48477 Hörstel (DE)

(56) Entgegenhaltungen:
- DE-A- 3 242 661
- DE-B- 1 139 970
- US-A- 5 284 687
- PATENT ABSTRACTS OF JAPAN vol. 012, no. 289 (M-728), 8. August 1988 (1988-08-08) -& JP 63 067133 A (TOMY KIKAI KOGYO KK), 25. März 1988 (1988-03-25) -& DATABASE WPI Week 198818 Derwent Publications Ltd., London, GB; AN 1988-123142 XP002193161 & JP 63 067133 A

## Beschreibung

Die Erfindung betrifft einen Extruderdüsenkopf, vorzugsweise Folienblaskopf, bestehend aus einem inneren zylindrischen Dorn und einem diesen konzentrisch einfassenden Mantel, zwischen denen ein ringförmiger Kanal gebildet ist, der in einen Düsenspalt mündet, und aus mindestens einer in den dem Düsenspalt gegenüber liegenden Bereich in den ringförmigen Kanal mündenden, eine Schmelze zuführenden Leitung, wobei der Dorn einstückig mit einem flanschartigen Fuß versehen ist.

Ein Extruderdüsenkopf ist beispielsweise aus der DE 11 39 970 B bekannt. Dabei handelt es sich um einen Umlenk-Folienblaskopf, in dem die Schmelze, welche durch eine Bohrung zugeführt wird, im wesentlichen rechtwinklig umgelenkt und dabei gleichmäßig auf einen Ringspalt verteilt wird. Zur gleichmäßigen Verteilung der Schmelze dienen mehrere hintereinander angeordnete und austauschbare Dornteite.

Andere Folienblasköpfe weisen üblicherweise einen Dorn auf, in den eine oder mehrere wendelförmige Nuten eingearbeitet sind, deren Tiefe von dem oder den Zuführungskanälen ausgehend in Richtung zu dem Düsenspalt hin abnimmt, so dass die Kunststoffschmelze zunehmend über die die Kanäle begrenzenden Stege hinwegtritt und eine gleichmäßige Strömung in axialer Richtung annimmt. Ein derartiger Extrusionsdüsenkopf wird in der JP 63 067133 A gezeigt. Dieser Extrusionsdüsenkopf weist einen Dorn auf, der einstückig mit einem Fuß ausgebildet ist. Um den Mantel exakt konzentrisch um den Dorn montieren zu können, wird der Mantel vor der Montage erwärmt, so dass dieser sich leicht ausdehnt und über den Dorn geschoben werden kann. Während des Abkühlens des Mantels legt dieser sich mit seiner Innenoberfläche auf Teile der Außenoberfläche des Dorns, so dass sich automatisch eine exakt konzentrische Ausrichtung ergibt.

Ein besonderes Problem bekannter Extruderdüsenköpfe besteht darin, dass der Dorn jenseits des Anfangs des ringförmigen Kanals dichtend in eine zylindrische Bohrung des Mantels eingepasst wird. Wird der Extruderdüsenkopf jedoch durch die diesen durchströmende Kunststoffschmelze erwärmt, dehnt sich der Mantel aufgrund seines größeren Durchmessers stärker als der zentrale Dorn, so dass sich zwischen beiden ein Spalt bilden kann, in den die unter Druck eingespeiste Kunststoffschmelze eindringt. Da sich die Schmelze im Bereich dieses Spalts aufstauen und aufgrund ihrer langen Verweilzeit in dem heißen Düsenkopf sich zersetzen und verspröden kann, können von der Schmelze Teilchen der abgelagerten Schmelze mitgerissen werden, die sich in dem extrudierten Folienschlauch bzw. der aufgeblasenen Schlauchblase als Störungsstellen bemerkbar machen.

Aufgabe der Erfindung ist es daher, einen Extruderdüsenkopf der eingangs angegebenen Art zu schaffen, bei dem Spalte zwischen dem zentralen Dorn und dem diesen einfassenden Mantel vermieden sind, in denen sich Kunststoffschmelze stauen, ablagem und verspröden kann.

Erfindungsgemäß wird diese Aufgabe durch einen Extrusionsdüsenkopf nach Anspruch 1 sowie ein Verfahren zu dessen Herstellung nach Anspruch 6 gelöst. Der Dorn ist einstückig mit einem flanschartigen Fuß versehen und in seinem an den Fuß angrenzenden Bereich mit mindestens einer die Schmelze zuführenden Bohrung versehen. Auf den Dorn angrenzend ist an den Fuß ein den Spalt zwischen beiden dichtender Ring aufgeschrumpft. Auf den Ring ist ein zylindrischer Mantel aufgesetzt und dichtend mit diesem verbunden, wobei der Mantel den Dorn unter Bildung des ringförmigen Kanals einfaßt.

Bei dem erfindungsgemäßen Extruderdüsenkopf ist der Dorn gegenüber dem flanschartigen Fuß, der materialeinstückig mit dem Dorn verbunden sein kann, durch den aufgeschrumpften Ring sicher abgedichtet. Der Ring wird mit einer solchen Vorspannung auf den Dorn aufgeschrumpft, daß sich auch bei Erwärmung von Dorn und Ring zwischen beiden kein Spalt ausbilden kann, in den Schmelze eindringen und in diesem verspröden kann. Auf den Ring ist der zylindrische Mantel aufgesetzt und dichtend mit diesem verbunden.

Nach einer bevorzugten Ausführungsform ist vorgesehen, daß der Dorn in seinem an den Fuß angrenzenden Bereich mit einer oder mehreren wendelförmigen Nuten mit zum Düsenspalt hin abnehmender Tiefe versehen ist, die zum Fuß hin geschlossen sind und in deren fußnahen Anfangsbereichen die die Schmelze zuführenden Bohrungen münden, wobei der aufgeschrumpfte Ring das nutfreie Ende des Dorns und dessen mit den Nuten versehenen Anfangsbereich dichtend einfaßt. Bei dieser Ausführungsform dichtet der aufgeschrumpfte Ring im Fußbereich des Dorns die Nutränder spaltfrei ab, so daß aus den Nuten die in deren Anfangsbereich eingespeiste Schmelze in den Ringraum zwischen dem Dorn und dem Mantel eintreten kann, in dem die Schmelze zunehmend und gleichmäßig eine axiale Strömung einnehmen kann.

Zweckmäßigerweise sind der Fuß und der Ring mit in einer gemeinsamen Ebene liegenden radialen Ringflächen versehen, die dichtend aufeinander liegen und dichtend miteinander verspannt werden können.

Zweckmäßigerweise sind auch der Ring und der Mantel mit in einer gemeinsamen radialen Ebene liegenden Ringflächen versehen, die dichtend aneinander liegen und miteinander verspannt sind.

Zur Verspannung des Mantels mit dem Ring kann der Mantel unter Zwischenschaltung des Rings durch Dehnschrauben mit der Ringfläche des Fußes ver spannt werden.

Handelt es sich bei dem Extruderdüsenkopf um einen Folienblaskopf, können zwischen den die Schmelze zuführenden Kanälen Bohrungen oder Kanäle zum Zu- und Abführen der Blasluft in bekannter Weise vorgesehen werden.

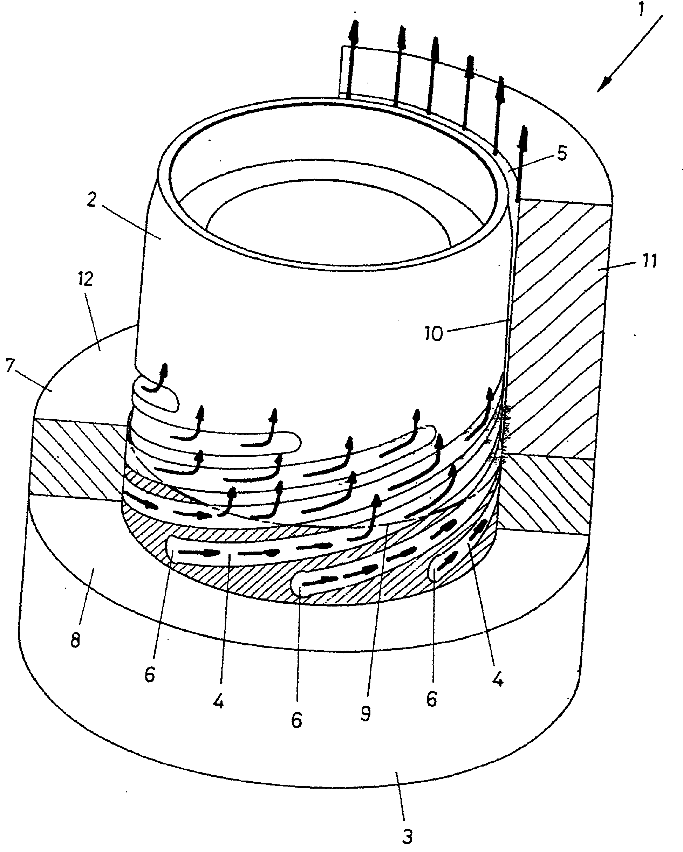

Ein Ausführungsbeispiel der Erfindung wird nachstehend anhand der Zeichnung näher erläutert, in deren einziger Figur ein Extruderdüsenkopf mit geschnittenem auf dem Dorn aufgeschrumpften Ring und geschnittenem Mantel schematisch dargestellt ist.

Der Folienblaskopf 1 besteht aus einem inneren zentralen Dorn 2, der einstückig mit einem flanschförmigen Fuß 3 versehen ist. Der Dorn 2 ist ausgehend von seinem fußnahen Bereich mehrgängig mit wendelförmigen Nuten 4 versehen, deren Tiefen zum Düsenspalt 5 hin abnehmen. Die Anfangsbereiche der Nuten 4 sind zu dem flanschartigen Fuß 3 hin geschlossen. In den Anfangsbereichen der Nuten 3 münden Bohrungen 6, durch die über nicht dargestellte Bohrungen und Kanäle die Schmelze zugeführt wird. Auf den Dorn 2 ist dichtend ein Ring 7 mit rechteckigem Querschnitt aufgeschrumpft, dessen untere Ringfläche stumpf auf der radialen Ringfläche 8 des Fußes 3 aufliegt, die mit dem Mantel des Dorns 2 eine rechtwinkelige Stufe bildet. Der aufgeschrumpfte Ring 7 faßt den Anfangsbereich der wendelförmigen Nuten 3 des Dorns ein, und zwar in der Weise, daß er mit beträchtlicher Vorspannung dichtend auf den schraffierten Teil des Dorns, also auf den die Nuten begrenzenden Stege und Ränder, aufliegt. Der von dem Ring 7 eingefaßte Bereich des Dorns 2 ist zu dem Düsenspalt 5 hin durch die gestrichelte Linie 9 begrenzt. An den durch die gestrichelte Linie 9 gekennzeichneten oberen Rand des Rings 7 tritt die Schmelze sodann in den Ringspalt 10 ein. Auf den Ring 7 ist ein zylindrischer ringförmiger Mantel 11 aufgesetzt, zwischen dem und dem von diesem eingefaßten Dorn 2 der ringförmige Kanal oder Ringspalt 10 gebildet ist. Dieser Ringspalt 10 mündet in der dargestellten Weise in den Düsenspalt 5.

Der zylindrische Mantel 11 ist an seinem unteren Ende mit einer radialen ringförmigen Dichtfläche versehen, die stumpf und dichtend auf der oberen Ringfläche 12 des aufgeschrumpften Rings 7 aufliegt. Der zylinderringförmige Mantel 1 ist mit nicht dargestellten axialen Bohrungen versehen, die mit Bohrungen des Rings 7 fluchten und in diese Bohrungen sind nicht dargestellte Spannschrauben eingesetzt, die in nicht dargestellte Gewindebohrungen in dem unteren flanschartigen Fuß 3 eingeschraubt sind.

## Patentansprüche

1. Extrusionsdüsenkopf (1), vorzugsweise Folienblaskopf, bestehend aus einem inneren zylindrischen Dorn (2) und einem diesen konzentrisch einfassenden Mantel (11), zwischen denen (2, 11) ein ringförmiger Kanal (10) ausgebildet ist, der in einem Düsenspalt (5) mündet, und aus mindestens einer in den dem Düsenspalt (5) gegenüber liegenden Bereich in den ringförmigen Kanal (10) mündenden, eine Schmelze zuführenden Leitung, wobei der Dorn (2) einstückig mit einem flanschartigen Fuß (3) versehen ist und in seinem (2) an den Fuß (3) angrenzenden Bereich mit mindestens einer die Schmelze zuführenden Bohrung (6) versehen ist,
**dadurch gekennzeichnet,**
- **dass** auf den Dorn (2) angrenzend an den Fuß (3) ein den Spalt zwischen beiden dichtender Ring (7) aufgeschrumpft ist,
- wobei die Durchmesser von Dorn und Ring so aufeinander abgestimmt sind, dass der Ring im aufgeschrumpften Zustand unter Vorspannung steht und dichtend auf Teilen des Dorns aufliegt
- **dass** auf dem Ring (7) ein zylindrischer Mantel (11) aufgesetzt und dichtend mit diesem (7) verbunden ist, der (11) den Dorn (2) unter Bildung des ringförmigen Kanals (10) einfasst.

2. Extruderdüsenkopf nach Anspruch 1, **dadurch gekennzeichnet, daß** der Dorn (2) in seinem an den Fuß (3) angrenzenden Bereich mit einer oder mehreren wendelförmigen Nuten (4) mit zum Düsenspalt (5) hin abnehmenden Tiefen versehen ist, die zum Fuß (3) hin geschlossen sind und in deren fußnahen Anfangsbereichen die die Schmelze zuführenden Bohrungen (6) münden, und daß der aufgeschrumpfte Ring (7) das nutfreie Ende des Dorns und dessen mit den Nuten (4) versehenen Anfangsbereich dichtend einfaßt.

3. Extruderdüsenkopf nach Anspruch 1 oder 2, **dadurch gekennzeichnet, daß** der Fuß (3) und der Ring (7) mit in einer gemeinsamen Ebene liegenden radialen Ringflächen versehen sind.

4. Extruderdüsenkopf nach einem der Ansprüche 1 bis 3, **dadurch gekennzeichnet, daß** der Ring (7) und der Mantel (11) mit in einer gemeinsamen radialen Ebene liegenden Ringflächen versehen sind.

5. Extruderdüsenkopf nach einem der Ansprüche 1 bis 4, **dadurch gekennzeichnet, daß** der Mantel (11) mit dem Ring (7) verspannt ist.

6. Verfahren zur Herstellung eines Extrusionsdüsenkopfes (1), vorzugsweise eines Folienblaskopfes,
welcher aus einem aus einem inneren zylindrischen Dorn (2) und einem diesen konzentrisch einfassenden Mantel (11) besteht,
zwischen denen (2, 11) ein ringförmiger Kanal (10) ausgebildet ist, der In einem Düsenspalt (5) mündet, und weiterhin eine aus mindestens einer in den dem Düsenspalt (5) gegenüber liegenden Bereich in den ringförmigen Kanal (10) mündenden, eine Schmelze zuführenden Leitung aufweist,
wobei der Dorn (2) einstückig mit einem flanschartigen Fuß (3) versehen ist und in seinem (2) an den Fuß (3) angrenzenden Bereich mit mindestens einer die Schmelze zuführenden Bohrung (6) versehen ist,
**dadurch gekennzeichnet,**
- **dass** auf den Dorn (2) angrenzend an den Fuß (3) ein den Spalt zwischen beiden dichtender Ring (7) mit Vorspannung so aufgeschrumpft wird, dass sich auch bei Erwärmung von Dorn (2) und Ring (7) zwischen beiden kein Spalt ausbilden kann, in den Schmelze eindringen kann und
- **dass** auf dem Ring (7) der zylindrische Mantel (11) aufgesetzt und dichtend mit diesem (7) verbunden wird.

## Claims

1. Extruder die (1), preferably a film blowing die, comprising an inner cylindrical mandrel (2) and a casing (11) concentrically enclosing it, between which (2, 11) there is formed an annular channel (10), which opens out into a die gap (5), and comprising at least one melt-supplying line, which opens out into the annular channel (10) in the region remote from the die gap (5), the mandrel (2) being integrally provided with a flange-like foot (3) and being provided in its (2) region adjacent to the foot (3) with at least one bore (6) supplying the melt,
**characterized**
- **in that** a ring (7) sealing the gap between the mandrel (2) and the foot (3) is shrink-fitted onto the said mandrel adjacent to the said foot,
- the diameters of the mandrel and the ring being made to match each other in such a way that, in the shrink-fitted state, the ring rests on parts of the mandrel under prestress and with a sealing effect,
- **in that** a cylindrical casing (11) is fitted on the ring (7) and connected to the latter (7) with a sealing effect, which casing (11) encloses the mandrel (2) while thereby forming the annular channel (10).

2. Extruder die according to Claim 1, **characterized in that** the mandrel (2) is provided in its region adjacent to the foot (3) with one or more helical grooves (4) with depths decreasing towards the die gap (5), which grooves are closed towards the foot (3) and in the starting regions of which, near, the foot, the bores (6) supplying the melt open out, and **in that** the shrink-fitted ring (7) encloses the groove-free end of the mandrel and its starting region, provided with the grooves (4), with a sealing effect.

3. Extruder die according to Claim 1 or 2, **characterized in that** the foot (3) and the ring (7) are provided with radial annular surfaces lying in a common plane.

4. Extruder die according to one of Claims 1 to 3, **characterized in that** the ring (7) and the casing (11) are provided with annular surfaces lying in a common radial plane.

5. Extruder die according to one of Claims 1 to 4, **characterized in that** the casing (11) is braced with the ring (7).

6. Process of manufacturing an extruder die (1), preferably a film blowing die,
which comprises an inner cylindrical mandrel (2) and a casing (11) concentrically enclosing it,
between which (2, 11) there is formed an annular channel (10), which opens out into a die gap (5), and also has at least one melt-supplying line, which opens out into the annular channel (10) in the region remote from the die gap (5),
the mandrel (2) being integrally provided with a flange-like foot (3) and being provided in its (2) region adjacent to the foot (3) with at least one bore (6) supplying the melt,
**characterized**
- **in that** a ring (7) sealing the gap between the mandrel (2) and the foot (3) is shrink-fitted with prestress onto the said mandrel adjacent to the said foot in such a way that, even when the mandrel (2) and the ring (7) are subjected to heating, no gap into which melt can penetrate can form between the two, and
- **in that** the cylindrical casing (11) is fitted on the ring (7) and connected to the latter (7) with a sealing effect.

## Revendications

1. Tête d'extrusion (1), de préférence tête de soufflage de feuille, constituée d'un mandrin cylindrique intérieur (2) et d'une enveloppe (11) entourant celui-ci concentriquement, entre lesquels (2, 11) est réalisé un canal annulaire (10) qui débouche dans une fente de filière (5) et d'au moins un conduit d'amenée de masse fondue débouchant dans la zone opposée à la fente de filière (5) dans le canal annulaire (10), où le mandrin (2) est pourvu en une pièce d'un pied en forme de bride (3) et est pourvu à sa zone (2) avoisinant le pied (3) d'au moins un perçage (6) amenant la masse fondue,
**caractérisée**
- **en ce qu'**est frettée sur le mandrin (2), de manière contigue au pied (3), une bague (7) rendant étanche la fente entre les deux,
- où les diamètres du mandrin et de la bague sont accordés l'un à l'autre de façon que la bague, à l'état fretté, soit sous précontrainte et s'applique d'une manière étanche à des parties du mandrin
- **en ce qu'**est placée, sur la bague (7), une enveloppe cylindrique (11) et est reliée d'une manière étanche à celle-ci (7) qui (11) entoure le mandrin (2) en formant le canal annulaire (10).

2. Tête d'extrusion selon la revendication 1, **caractérisée en ce que** le mandrin (2) présente dans sa zone avoisinant le pied (3) une ou plusieurs rainures hélicoïdales (4) avec des profondeurs diminuant vers la fente de filière (5), qui sont fermées vers le pied (3) et débouchent dans leurs zones initiales proches du pied dans les perçages (6) amenant la masse fondue, et **en ce que** la bague frettée (7) enserre d'une manière étanche l'extrémité exempte de rainures du mandrin et sa zone initiale pourvue des rainures (4).

3. Tête d'extrusion selon la revendication 1 ou 2, **caractérisée en ce que** le pied (3) et la bague (7) sont pourvus de faces annulaires radiales situées dans un plan commun.

4. Tête d'extrusion selon l'une des revendications 1 à 3, **caractérisée en ce que** la bague (7) et l'enveloppe (11) sont pourvues de faces annulaires situées dans un plan radial commun.

5. Tête d'extrusion selon l'une des revendications 1 à 4, **caractérisée en ce que** l'enveloppe (11) est mise en tension avec la bague (7).

6. Procédé de fabrication d'une tête d'extrusion (1), de préférence d'une tête de soufflage de feuille,
qui est constituée d'un mandrin cylindrique interne (2) et d'une enveloppe (11) entourant concentriquement celui-ci,
entre lesquels (2, 11) est réalisé un canal annulaire (10) qui débouche dans une fente de filière (5), et présente en outre au moins un conduit amenant la masse fondue, débouchant dans la zone opposée à la fente de filière (5) dans le canal annulaire (10),
où le mandrin (2) est pourvu unitairement d'un pied en forme de bride (3) et présente dans sa zone (2) avoisinant le pied (3) au moins un perçage (6) amenant la masse fondue,
**caractérisé**
**en ce qu'**est frettée sur le mandrin (2), de manière contigue au pied (3), une bague (7) rendant étanche la fente entre les deux sous précontrainte de façon que même lors d'un échauffement du mandrin (2) et de la bague (7), une fente ne peut pas se former entre les deux dans laquelle la masse fondue peut pénétrer et
**en ce qu'**est placée sur la bague (7) l'enveloppe cylindrique (11) et est reliée d'une manière étanche à celle-ci (7).
